(19) Europäisches Patentamt
European Patent Office
Office européen des brevets

(11) Veröffentlichungsnummer: **0 164 638**
**B1**

(12) # EUROPÄISCHE PATENTSCHRIFT

(45) Veröffentlichungstag der Patentschrift: **09.05.90**

(51) Int. Cl.$^5$: **C 08 G 75/02**

(21) Anmeldenummer: **85106546.6**

(22) Anmeldetag: **29.05.85**

(54) **Verfahren zur Herstellung von Polyarylensulfiden mit funktionellen Endgruppen.**

(30) Priorität: **09.06.84 DE 3421608**

(43) Veröffentlichungstag der Anmeldung:
**18.12.85 Patentblatt 85/51**

(45) Bekanntmachung des Hinweises auf die Patenterteilung:
**09.05.90 Patentblatt 90/19**

(84) Benannte Vertragsstaaten:
**DE FR GB IT**

(56) Entgegenhaltungen:
**EP-A-0 053 344**
**EP-A-0 079 144**
**EP-A-0 125 600**
**FR-A-2 470 780**

(73) Patentinhaber: **BAYER AG**
**D-5090 Leverkusen 1 Bayerwerk (DE)**

(72) Erfinder: **Heitz, Walter, Prof.**
**Am Schmidtborn 5**
**D-3575 Kirchhain (DE)**
Erfinder: **Koch, Wolfgang, Dr.**
**Oranienstrasse 13**
**D-6349 Mittenaar 3 (DE)**

**EP 0 164 638 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung von Polyarylensulfiden mit funktionellen Endgruppen.

Polyarylensulfide und ihre Herstellung sind z.B. aus den US—PS 25 13 188, DE—AS 24 53 485, bekannt. Weiterhin ist bekannt, bei der Herstellung von Polyarylensulfiden das Verfahren so durchzuführen, daß die hergestellten Polymeren noch zur weiteren Umsetzung befähigte Gruppen enthalten (z.B. FR—PS 2 470 780).

Es wurde nun gefunden, daß Polyarylensulfide mit weiteren zur Umsetzung fähigen reaktiven Endgruppen erhalten werden, wenn man bei der Herstellung dem Umsetzungsgemisch Disulfide und gegebenenfalls weitere Oxidationsmittel und monofunktionelle Verbindungen zusetzt.

Gegenstand der Erfindung ist daher ein Verfahren zur Herstellung von Polyarylensulfiden mit funktionellen Endgruppen aus

a) 50 bis 100 Mol-% Dihalogenaromaten der Formel

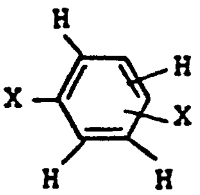

(I),

und 0 bis 50 Mol-% Dihalogenaromaten der Formel

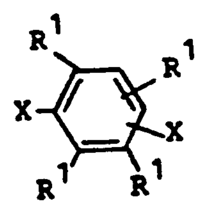

(II),

in denen

X für zueinander meta oder para-ständiges Halogen wie Chlor oder Brom steht und

$R^1$gleich oder verschieden ist und Wasserstoff, $C_1$—$C_4$-Alkyl, $C_5$—$C_{10}$-Cycloalkyl, $C_6$—$C_{10}$-Aryl, $C_7$—$C_{14}$-Alkylaryl, $C_7$—$C_{14}$-Arylalkyl sein kann, wobei zwei zueinander orthoständige Reste $R^1$ zu einem aromatischen oder heterocyclischen Ring mit bis zu 10 Ringatomen, wobei bis zu 3 Ring C-Atome durch Heteroatome wie O, N, S ersetzt sein können, verknüpft sein können und immer ein Rest $R^1$ verschieden von Wasserstoff ist und

b) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von a:b im Bereich von 1:1 bis 1:2, vorzugsweise 1:1 bis 1:1,5, liegt in

c) organischen Lösungsmitteln, bevorzugt N-Alkyllactamen oder peralkylierten Harnstoffen, gegebenenfalls unter Mitverwendung von Katalysatoren und/oder Cosolventien, wobei das molare Verhältnis von Alkalisulfiden b) zu dem organischen Lösungsmittel c) im Bereich von 1:2 bis 1:20 liegt, und

d) Wasser in Form von Hydrat- oder freiem Wasser, wobei das molare Verhältnis von b:d im Bereich von 1:0 bis 1:9, vorzugsweise 1:3 bis 1:5 liegt und das Verfahren bei einer Reaktionstemperatur von 140°C bis 280°C, gegebenenfalls unter Überdruck durchgeführt wird, dadurch gekennzeichnet, daß die Umsetzung in Gegenwart eines dihalogenierten Disulfids der Formel (III)

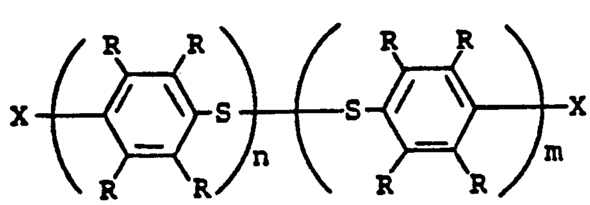

(III),

in welcher

X Halogen wie Chlor und Brom ist,

R Wasserstoff, ein $C_1$—$C_4$-Alkyl-, ein $C_5$—$C_{10}$-Cycloalkyl-, ein $C_7$—$C_{14}$-Aryl-Rest ist und die Gesamtzahl der Kohlenstoffatome in jedem Aromaten von 6 bis 30 liegt, mit der Maßgabe, daß R in mindestens 50 Mol-

% des verwendeten Disulfids Wasserstoff sein muß, und

n, m ganze Zahlen von 1 bis 5, vorzugsweise 1 bis 3 sind,

durchgeführt wird, mit der Maßgabe, daß das molare Verhältnis des Disulfids zum Dihalogenbenzol der Formeln (I) und (II) im Bereich von 0,01:1 bis 1,0:1 liegt und eine monofunktionelle Verbindung der Formel IV und gegebenenfalls ein Oxidationsmittel zum Umsetzungsgemisch gegeben wird.

Beispiele für erfindungsgemäß einzusetzende Dihalogenaromaten der Formel (I) sind: m-Dichlorbenzol, p-Dichlorbenzol, p-Dibrombenzol, m-Dibrombenzol und 1-Chlor-4-brombenzol. Sie sind allein oder im Gemisch miteinander verwendbar.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Bei der Zugabe der Polyhalogenverbindungen werden gegebenenfalls 1 bis 50 Mol-%, bevorzugt 1 bis 25 Mol-% weiterer Basen, z.B. Alkalihydroxide wie NaOH oder KOH oder 0,5 bis 25 Mol-%, bevorzugt 0,5 bis 12,5 Mol-% Carbonate wie $Na_2CO_3$, bezogen auf eingesetztes Alkalisulfid, zugesetzt.

Beispiele für erfindungsgemäß einzusetzende aromatische Disulfide der Formel (III) sind:

4,4'-Dibromdiphenyldisulfid, 4,4'-Dichlordiphenyldisulfid, Bis-(4-brom-3-methylphenyl)-disulfid, Bis-(4-(4-bromphenyl(thio)phenyl)-disulfid. Sie sind alleine oder in Gemischen einsetzbar.

Der Umsetzungsmischung werden monofunktionellen Verbindung der Formel (IV)

$$X—R^1—Y \qquad (IV)$$

worin

X Chlor oder Brom

Y Wasserstoff, $—O—CH{=}CH_2$, $—S—CH{=}CH_2$, $—OH$, $—OR^2$, $—SR^2$, $—NR^2$, $—NO_2$, $—CN$, $—COOR^2$, CHO,

$R^1$ ein Alkyl- bzw. ein Cycloalkylrest mit 1 bis 10 Kohlenstoffatomen, ein Arylrest mit 6 bis 10 C-Atomen, ist mit der Maßgabe, daß dann zwei Substituenten Y am Arylrest stehen können,

oder ein Arylrest der Formel (V)

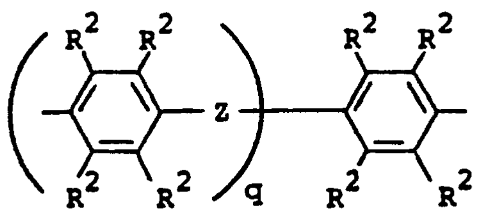

(V),

worin

Z $CH_2$, $C(CH_3)_2$, Schwefel oder Sauerstoff ist und jedes

$R^2$ Wasserstoff, ein Alkyl-, ein Cycloalkyl-, ein Arylrest oder eine Mischung derselben ist und

mit der Maßgabe, daß das molare Verhältnis der Dihalogenbenzole der Formel I und II zu der monofunctionellen Verbindung der Formel IV im Bereich von 1:0,05 bis 1:2 liegt, zugesetzt.

Beispielsweise können folgende Verbindungen der Formel (IV) eingesetzt werden:

1-Bromdecan, Isopropylbromid, tert.-Butylbromid, 2-Chlorethyl-vinylether, 2-Bromethanol, 2-Bromethyl-ethylether, Chlordimethylsulfid, 2-Bromethylamin, 2-Diethylaminoethylchlorid, 2-Bromnitroethan, 2-Chloressigsäure, 4-Chlorphenyl-vinylsulfid, 4-Bromphenol, 2,6-Dimethyl-4-bromphenol, 4-Bromanisol, 4-Bromanilin, 3-Bromnitrobenzol, 4-Chlorbenzonitril, 4-Chlorbenzaldehyd, 4-Chlorbenzoesäure, 4-Chlorphthalsäure, 4-Chlorphthalsäureanhydrid, 4-Chlor-o-phenylendiamin, 4-Brom-tert.-butylbenzol, 4-Chlor-4'-hydroxybenzophenon, 4-Brom-4'-hydroxybiphenyl, 4-Brom-4'-aminodiphenylsulfid, 4-Brom-4'-hydroxydiphenylether, (4-Bromphenyl)-(4'-hydroxyphenyl)methan.

Die Alkalisulfide, bevorzugt Kalium- und Natriumsulfid, werden vorzugsweise in Form ihrer Hydrate oder wäßrigen Lösungen eingesetzt. Sie können auch aus Schwefelwasserstoff und den entsprechenden Alkalihydroxiden oder aus Alkalihydrogensulfiden und entsprechenden Alkalihydroxiden gemäß einer stöchiometrischen Umsetzung in der Reaktionslösung direkt hergestellt werden. Es können Mischungen der Alkalisulfide eingesetzt werden.

Je nach Anteil von Alkalihydrogensulfid in der Reaktionslösung, das als Verunreinigung im Alkalisulfid enthalten sein kann oder während der Umsetzung entstehen kann, wird zusätzlich stöchiometrisch Alkalihydroxid wie Natrium- oder Kaliumhydroxid zur Regenierung von Alkalisulfid zudosiert. Gegebenenfalls können anstelle der Alkalihydroxide Verbindungen zugegeben werden, die unter den Reaktionsbedingungen Alkalihydroxide abspalten bzw. bilden.

Beispiele für erfindungsgemäß einzusetzenden Oxidationsmittel sind: Schewfel (vorzugsweise elementarer Schwefel), Halogene wie Jod, Brom, Chlor, Metallverbindungen wie Mangan(IV)oxid, Eisen(II)-chlorid, Kupfer(II)chlorid.

Sie sind allein oder im Gemisch miteinander einsetzbar.

Das Oxidationsmittel wird der Umsetzungsmischung in einem Oxidationsäquivalentverhältnis von 0,02:1 bis 0,5:1, bezogen auf das Dihalogenbenzol zugesetzt.

Wird Schwefel als Oxidationsmittel verwendet, werden vorzugsweise Molverhältnisse Schwefel/Dihalogenbenzol von 0,02:1 bis 0,3:1 verwendet.

Das Oxidationsmittel und das Disulfid kann am Anfang der Umsetzung der Umsetzungsmischung zugegeben werden oder nach einem Zeitraum der 50 bis 90% der insgesamt gewählten Umsetzungsgdauer entspricht.

Generell kann jedes polare Lösungsmittel für die Reaktion verwendet werden, das eine ausreichende Löslichkeit der organischen und anorganischen Reaktanten unter den Reaktionsbedingungen gewährleistet. Bevorzugt werden Amide, Lactame und Harnstoffe und besonder bevorzugt N-alkylierte Amide, Lactame und cyclische Harnstoffe verwendet.

Lactame im Sinne der Erfindung sind solche von Aminosäuren mit 3 bis 5 C-Atomen, die gegebenenfalls Substituenten am Kohlenstoffgerüst tragen können, die unter Reaktionsbedingungen inert sind, z.B. Alkylrest mit 1 bis 5 C-Atomen.

N-Alkyllactame im Sinne der Erfindung sind wie die erfindungsgemäßen Lactame definiert, tragen jedoch zusätzlich am Stickstoffatom einen Alkylrest mit 1 bis 6 C-Atomen.

Harnstoffe im Sinne der Erfindung sind tetraalkylierte Harnstoffe der Formel (VI),

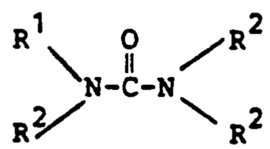

(VI),

in der

$R^2$ gleich oder verschieden sein kann und einen $C_1$- bis $C_4$-Alkylrest bedeutet, sowie cyclische Harnstoffe der Formel (VII),

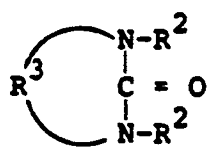

(VII),

in der

$R^2$ die obengenannte Bedeutung hat und bevorzugt für Methyl steht und

$R^3$ ein Ethylen- oder Propylenrest, der auch substituiert sein kann, ist.

Beispielsweise seien genannt:

N,N-Dimethylformamid, N,N-Diethylacetamid, N,N-Di-propylacetamid, N,N-Dimethylbenzoesäureamid, Caprolactam, N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isopropyl-2-piperidon, N-Isobutyl-2-piperidon, N-Methyl-6-methyl-2-piperidon, N-Methyl-3-ethyl-2-piperidon, N-Methyl-2-oxo-hexamethylenimin, N-Ethyl-2-oxo-hexamethylenimin, Tetramethylharnstoff, 1,3-Dimethylethylenharnstoff, 1,3-Dimethyl-propylenharnstoff.

Es können Mischungen der vorstehenden Lösungsmittel gewählt werden.

Die Mengen Lösungsmittel kann in einem weiten Bereich gewählt werden, liegt im allgemeinen bei 2 bis 20 Mol pro Mol Alkalisulfid.

Die Umsetzungstemperatur beträgt in der Regel 140 bis 280°C, bevorzugt 180 bis 240°C.

Die Umsetzung kann in zwei Temperaturbereichen durchgeführt werden. So ist es z.B. möglich, daß nach Zugabe des Oxidationsmittels und des Disulfids eine Temperatur von 140 bis 260°C eingehalten wird und, nachdem 50 bis 90% der gewählten Gesamtumsetzungsdauer verstrichen sind, dann ein Temperaturbereich gewählt wird, der 20 bis 50°C über dem ersten temperaturbereich liegt.

Der Druck bei der Umsetzung kann 1 bis 20 bar betragen.

Die Reaktionszeit kann bis zu 10 Stunden betragen, vorzugsweise 0,2 bis 8 Stunden. Eine stufenweise Steigerung der Reaktionstemperatur während dieser Zeit kann von Vorteil sein.

Das Dihalogenbenzol und das alkalisulfid werden etwa äquimolar umgesetzt. Das Molverhältnis Dihalogenbenzol/Alkalisulfid liegt im Bereich von 1:1 bis 1:1 bevorzugt von 1:1 bis 1:1,5.

Das erfindungsgemäße Verfahren kann wie folgt durchgeführt werden:

Die Alkalisulfide werden im Lösungsmittel vorgelegt und dann kann gegebenenfalls in einem oder mehreren Schritten, beispielsweise durch Abdestillieren des Wassers aus der Lösung, der Wassergehalt verringert werden. Eine partielle Entwässerung vor der Zugabe der Dihalogenverbindungen kann

vorteilhaft sein.

Im Prinzip kann das Zusammengeben der Reaktanten in beliebiger Weise erfolgen. Die Dihalogenaromaten der Formeln (I) und (II) und das Disulfid der Formel (III) können zusammen oder getrennt, kontinuierlich, in Portionen oder direkt auf einmal zum Alkalisulfid und dem Lösungsmittel oder einem Teil davon gegeben werden. Es können aber auch das Alkalisulfid zusammen mit dem Lösungsmittel oder einem Teil davon zu den Verbindungen der Formeln (I) und (II) und dem Disulfid der Formel (III) gegeben werden. Es können auch alle Reaktanten direkt zusammengegeben werden. Beliebige andere Kombinationen der Zugabe der Reaktanten sind ebenfalls möglich.

Die Zugabe des Oxidationsmittels und der monofunktionellen Verbindung der Formel (IV) kann ebenfalls gemeinsam oder getrennt, in beliebiger Reihenfolge, auf einmal, Portionsweise oder kontinuierlich, gegebenenfalls gelöst in dem für die Umsetzung verwendeten Lösungsmittel, erfolgen.

Nach Zugabe des Oxidationsmittels und der Verbindung der Formel (IV) wird die Umsetzungstemperatur für einen weiteren Zeitraum aufrechterhalten. Vorteilhafterweise wird dieser Zeitraum doppelt bis neunmal so lang sein wie der Zeitraum vom Zeitpunkt der Zugabe des Oxidationsmittels und der Verbindung der Formel (IV) bis zum Umsetzungsende. Nach Beendigung der Umsetzung kann das Polyarylensulfid auf übliche Art abgetrennt werden.

Das Polyarylensulfid kann direkt aus der Reaktionslösung oder erst nach Zugabe, z.B. von Wasser und/oder verdünnten Säuren, nach üblichen Verfahrensweise durch Filtration oder durch Zentrifugieren abgetrennt werden. Anschließend werden die abgetrennten Polyarylensulfide gewaschen, z.B. mit Wasser.

Eine Wäsche oder Extraktion mit anderen Waschflüssigkeiten, die auch zusätzlich oder nachträglich zu dieser Wäsche durchgeführt werden kann, ist auch möglich.

Weiterhin kann das Polymere durch Abziehen des Lösungsmittels aus dem Reaktionsraum und eine anschließende Wäsche, wie oben beschrieben, gewonnen werden.

Die erfindungsgemäßen Polyarylensulfide können über ihre funktionellen Endgruppen weiter umgesetzt werden zu linearen oder vernetzten Polymeren und sie können zum Aufbau von anderen Kunststoffen mitverwendet werden.

## Beispiel 1

Herstellung von Poly(thio-1,4-phenylen) mit n-Decyl-Endgruppen

In einem mit Rührer, Manometer und Zudosiereinrichtung ausgestatteten 50 ml Glasautoklaven wurden 3,68 g (25 mmol) p-Dichlorbenzol, 0,72 g (2,5 mmol) 4,4'-Dichlordiphenyldisulfid, 3,63 g (27,5 mmol) Natriumsulfid-trihydrat und 30 ml N-Methyl-2-pyrrolidon zusammengegeben und nach dem Spülen mit Stickstoff auf 240°C erhitzt.

Nach einer Stunde wurden 1,11 g (5,0 mmol) 1-Bromdecan, gelöst in 5 ml N-Methyl-2-pyrrolidon, zugepumpt und das Umsetzungsmisch für eine weitere Stunde auf 240°C gehalten. Es entstand ein Druck von max. 6,2 bar. Das erkaltete Gemisch wurde in 200 ml 1n-Schwefelsäure ausgefällt und anschließend mit Methanol gewaschen.

Nach dem Trocknen im Vakuum (15 Torr) bei 60°C wurden 2,93 g (79,7%) Produkt mit einem Schmelzpunkt von 275°C erhalten.

## Beispiel 2

Herstellung von Poly(thio-1,4-phenylen) mit Aldehyd-Endgruppen

In der in Beispiel 1 beschriebenen Apparatur wurden 3,23 g (22 mmol) p-Dichlorbenzol, 1,58 g (5,5 mmol) 4,4'-Dichlordiphenyldisulfid, 3,63 g (27,5 mmol) Natriumsulfid-trihydrat, 2,04 g (11 mmol) p-Brombenzaldehyd und 30 ml N-Methyl-2-pyrrolidon zusammengegeben, mit Stickstoff gespült und für eine Dauer von zwei Stunden auf 240°C erhitzt. Der maximale Druck betrug 7,2 bar. Nach dem Abkühlen auf Raumtemperatur wurde das Reaktionsgemisch wie in Beispiel 1 beschrieben aufgearbeitet.

Es wurden 3,11 g (75,2%) eines leicht gelben Produktes mit einem Schmelzpunkt von 281°C erhalten.

## Patentanspruch

Verfahren zur Herstellung von Polyarylensulfiden mit funktionellen Endgruppen aus
a) 50 bis 100 Mol-% Dihalogenaromaten der Formel

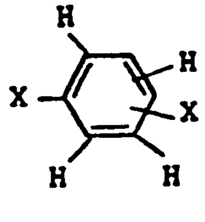

und 0 bis 50 Mol-% Dihalogenaromaten der Formel

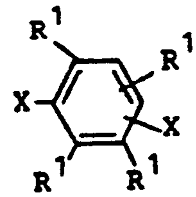

in denen

X für zueinander meta oder para-ständiges Halogen wie Chlor oder Brom steht und

$R^1$gleich oder verschieden ist und Wasserstoff, $C_1$—$C_4$-Alkyl, $C_5$—$C_{10}$-Cycloalkyl, $C_6$—$C_{10}$-Aryl, $C_7$—$C_{14}$-Alkylaryl, $C_7$—$C_{14}$-Arylalkyl sein kann, wobei zwei zueinander orthoständige Reste $R^1$ zu einem aromatischen oder heterocyclischen Ring mit bis zu 10 Ringatomen, wobei bis zu 3 Ring C-Atome durch Heteroatome wie O, N, S ersetzt sein können, verknüpft sein können und immer ein Rest $R^1$ verschieden von Wasserstoff ist und

b) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von a:b im Bereich von 1:1 bis 1:2, liegt in

c) organischen Lösungsmitteln, bevorzugt N-Alkyllactamen oder peralkylierten Harnstoffen, gegebenenfalls unter Mitverwendung von Katalysatoren und/oder Cosolventien, wobei das molare Verhältnis von Alkalisulfiden b) zu dem organischen Lösungsmittel c) im Bereich von 1:2 bis 1:20 liegt, und

d) Wasser in Form von Hydrat- oder freiem Wasser, wobei des molare Verhältnis von b:d im Bereich von 1:0 bis 1:9, liegt und das Verfahren bei einer Reaktionstemperatur von 140°C bis 280°C, gegebenenfalls unter Überdruck durchgeführt wird, dadurch gekennzeichnet, daß die Umsetzung in Gegenwart eines dihalogenierten aromatischen Disulfids der Formel (III)

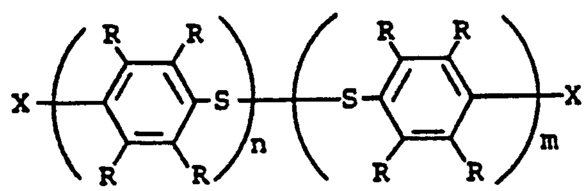

(III),

in welcher

X Halogen wie Chlor und Brom ist,

R Wasserstoff, ein $C_1$—$C_4$-Alkyl-, ein $C_5$—$C_{10}$-Cycloalkyl-, ein $C_7$—$C_{14}$-Aryl-Rest ist und die Gesamtzahl der Kohlenstoffatome in jedem Aromaten von 6 bis 30 liegt, mit der Maßgabe, daß R in mindestens 50 Mol-% des verwendeten Disulfids Wasserstoff sein muß, und

n, m ganze Zahlen von 1 bis 5, sind,

durchgeführt wird, mit der Maßgabe, daß das molare Verhältnis des Disulfids zum p-Dihalogenbenzol der Formeln (I) und (II) im Bereich von 0,01:1 bis 1,0:1 ist und eine monofunktionelle Verbindung der Formel (IV)

$$X—R^1—Y \qquad (IV),$$

worin

X Chlor oder Brom

Y Wasserstoff, $—O—CH{=}CH_2$, $—S—CH{=}CH_2$, $—OH$, $—OR^2$, $—SR^2$, $—NR^2$, $—NO_2$, $—CN$, $—COOR^2$, CHO,

$R^1$ ein Alkyl- bzw. ein Cycloalkylrest mit 1 bis 10 Kohlenstoffatomen, ein Arylrest mit 6 bis 10 C-Atomen, ist, mit der Maßgabe, daß dann zwei Substituenten Y am Arylrest stehen können,

oder ein Arylrest der Formel (V)

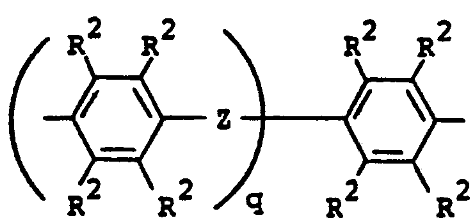

(V),

worin

Z $CH_2$, $C(CH_3)_2$, Schwefel oder Sauerstoff ist und jedes

$R^2$ Wasserstoff, ein Alkyl-, ein Cycloalkyl-, ein Arylrest oder eine Mischung derselben ist und

q für die Zahl 0 oder 1 steht,

verwendet wird und gegebenenfalls ein Oxidationsmittel zum Umsetzungsgemisch gegeben wird.

**Revendication**

Procédé de production de polyarylènesulfures porteurs de groupes fonctionelles terminaux, à partir de

a) 50 à 100 moles % d'hydrocarbures aromatiques dihalogénés de formule

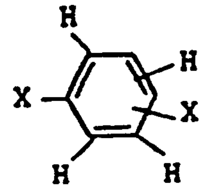

et de 0 à 50 moles % d'hydrocarbures aromatiques dihalogénés de formule

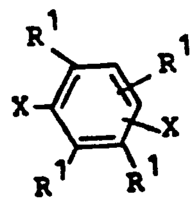

formules dans lesquelles

X représente des halogènes en méta et para l'un par rapport à 'autre, tels que le chlore et le brome et

$R^1$, de valeurs identiques ou différentes, peut représenter l'hydrogène, un reste alkyle en $C_1$ à $C_4$, cycloalkyle en $C_5$ à $C_{10}$, aryl en $C_6$ à $C_{10}$, alkylaryl en $C_7$ à $C_{14}$, arylalkyle en $C_7$ à $C_{14}$, deux restes $R^1$ en ortho l'un par rapport à l'autre pouvant former conjointement un noyau aromatique ou hétérocyclique ayant jusqu'à 10 atomes cycliques, dont jusqu'à 3 d'entre eux peuvent être remplacés par des hétéro-atomes tels que O, N, S, et il y a toujours un reste $R^1$ qui est différent de l'hydrogène, et

b) de sulfures alcalins, de préférence le sulfure de sodium ou de potassium ou leur mélange, de préférence sous forme de leurs hydrates ou de mélanges aqueux, le cas échéant conjointement avec des hydroxydes alcalins tels que l'hydroxyde de sodium et l'hdyroxyde de potassium, le rapport molaire a:b étant situé dans la plage de 1:1 à 1:2 dans

c) des solvants organiques, de préférence des N-alkyllactames ou des urées peralkylées, le cas échéant avec utilisation simultanée de catalyseurs et/ou de cosolvants, le rapport molaire des sulfures alcalins b) au solvant organique c) étant situé dans la plage de 1:2 à 1:20, et

d) de l'eau sous forme d'eau d'hydratation ou d'eau libre, le rapport molaire b:d étant compris dans la plage de 1:0 à 1:9 et le procédé étant mis en oeuvre à une température de réaction de 140 à 280°C, le cas échéant sous une surpression, caractérisé en ce que la réaction est conduite en présence d'un disulfure aromatique dihalogéné de formule (III)

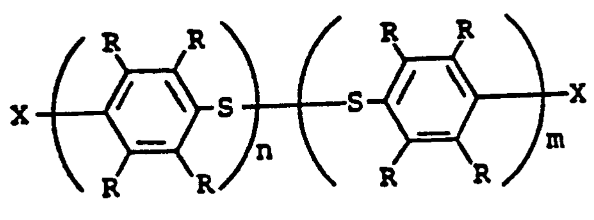
(III),

dans laquelle

X est un halogène tel que le chlore et le brome,

R est l'hydrogène, un reste alkyle en $C_1$ à $C_4$, un reste cycloalkyle en $C_5$ à $C_{10}$, un reste aryle en $C_7$ à $C_{14}$ et le nombre total d'atomes de carbone dans chaque composé aromatique est de 6 à 30, à condition que R dans au moins 50 moles % du disulfure utilisé soit de l'hydrogène, et

n et m sont des nombres entiers de 1 à 5,

sous réserve que le rapport molaire du disulfure au p-dihalogénobenzène de formules (I) et (II) se situe dans la plage de 0,01:1 à 1,0:1 et on utilise un composé monofonctionel de formule (IV)

$$X—R^1—Y \qquad (IV),$$

dans laquelle

X désigne le chlore ou le brome,

Y est l'hydrogène, un groupe $—O—CH=CH_2$, $—S—CH=CH_2$, $—OH$, $—OR^2$, $—SR^2$, $—NR^2$, $—NO_2$, $—CN$, $—COOR^2$, CHO,

$R^1$ est un reste alkyle ou un reste cycloalkyle ayant 1 à 10 atomes de carbone, un reste aryle ayant 6 à 10 atomes de carbone, sous réserve que deux substituants Y puissent alors se trouver sur le reste aryle, ou un reste aryle de formule (V)

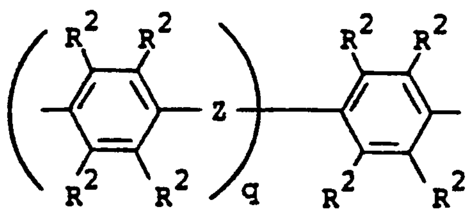

(V) ,

dans laquelle

Z est un groupe $CH_2$, $C(CH_3)_2$, le soufre ou l'oxygène et chaque

$R^2$ désigne l'hydrogène, un reste alkyle, un reste cycloalkyle, un reste aryle ou un mélange de ces restes et

q représente le nombre 0 ou 1,

et on ajoute le cas échéant un agent oxydant au mélange réactionnel.

**Claim**

1. A process for the preparation of polyarylenesulphides containing functional end groups from

a) 50 to 100 mol-% of dihalogenated aromatic compounds corresponding to the formula

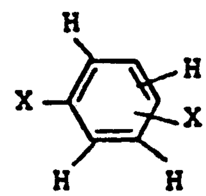

and 0 to 50 mol-% of dihalogenated aromatic compounds of the following formula

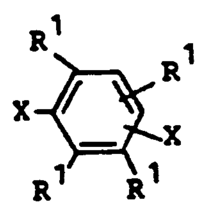

wherein the

X's stand for halogens such as chlorine or bromine in the meta- or para-position to one another and the

$R^1$'s may be identical or different and stand for hydrogen, $C_1—C_4$-alkyl, $C_5—C_{10}$-cycloalkyl, $C_6—C_{10}$-aryl, $C_7—C_{14}$-alkylaryl or $C_7—C_{14}$-arylalkyl and two groups $R^1$ in the ortho position to one another may be joined together to form an aromatic or heterocyclic ring containing up to 10 ring atoms, and up to three ring carbon atoms may be replaced by hetero atoms such as O, N or S, and one of the groups $R^1$ is invariably different from hydrogen, and

b) alkali metal sulphides, preferably sodium or potassium sulphide or a mixture thereof, preferably in the form of their hydrates or aqueous mixtures, optonally together with alkali metal hydroxides such as sodium or potassium hydroxide, the molar ratio of a:b being in the range of from 1:1 to 1:2, in

c) organic solvents, preferably N-alkyllactams or peralkylated ureas, optionally with the addition of catalysts and/or cosolvents, the molar ratio of alkali metal sulphides b) to the organic solvent c) being from 1:2 to 1:20, and

d) water in the form of water or hydration or free water, the molar ratio of b:d being in the range of from 1:0 to 1:9 and the process being carried out at a rection temperature of from 140°C to 280°C, optionally under excess pressure, characterised in that the reaction is carried out in the presence of a dihalogenated aromatic disulphide corresponding to formula (III)

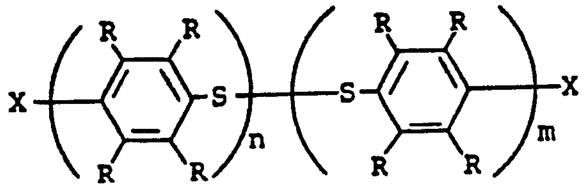

(III),

wherein

X stands for a halogen such as chlorine or bromine,

R stands for hydrogen or a $C_1$—$C_4$-alkyl, $C_5$—$C_{10}$-cycloalkyl or $C_7$—$C_{14}$-aryl group, and the total number of carbon atoms in each aromatic group is from 6 to 30, under the condition that R is hydrogen in at least 50 mol-% of the disulphide used, and

n and m stand for integers from 1 to 5,

under the condition that the molar ratio of the disulphide to the p-dihalogenobenzene of formulae (I) and (II) is in the range of from 0.01:1 to 1.0:1, and a monofunctional compound corresponding to formula (IV)

$$X—R^1—Y \quad (IV)$$

wherein

X stands for chlorine or bromine,

Y stands for hydrogen, $—O—CH{=}CH_2$, $—S—CH{=}CH_2$, —OH, $—OR^2$, $—SR^2$, $—NR^2$, $—NO_2$, —CN, $—COOR^2$ or CHO, and

$R^1$ stands for an alkyl or cycloalkyl group having 1 to 10 carbon atoms or an aryl group having 6 to 10 carbon atoms, in which case the aryl group may carry two substituents denoted by Y,

or an aryl group corresponding to formula (V)

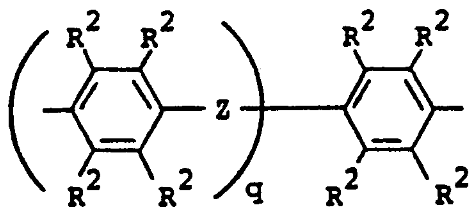

(V),

wherein

Z stands for $CH_2$, $C(CH_3)_2$, sulphur or oxygen and each

$R^2$ stands for hydrogen or an alkyl, cycloalkyl or aryl group or a mixture thereof and

q stands for the number 0 or 1

is used and an oxidizing agent is optionally added to the reaction mixture.